# EUROPÄISCHE PATENTSCHRIFT

(11) **EP 0 927 429 B1**
(45) Veröffentlichungstag und Bekanntmachung des Hinweises auf die Patenterteilung: **28.07.2004**
(21) Anmeldenummer: 98933522.9
(22) Anmeldetag: 13.05.1998
(51) Int. Cl.: H01J 9/22, C03C 17/00, B05D 7/22, B05D 1/00, B05C 7/04

(54) **VERFAHREN UND VORRICHTUNG ZUM BESCHLÄMMEN UND TROCKNEN VON GLASROHREN FÜR LAMPEN**
METHOD AND DEVICE FOR WASHING AND DRYING GLASS TUBES FOR LAMPS
PROCEDE ET DISPOSITIF POUR LAVER ET SECHER DES TUBES EN VERRE POUR LAMPES

(30) Priorität: 10.06.1997 DE 19724362
(43) Veröffentlichungstag der Anmeldung: 07.07.1999
(73) Patentinhaber: Patent-Treuhand-Gesellschaft für elektrische Glühlampen mbH, 81543 München (DE)
(72) Erfinder: PETER, Arnold, D-86438 Kissing (DE)
(86) Internationale Anmeldenummer: PCT/DE1998/001330
(87) Internationale Veröffentlichungsnummer: WO 1998/057346

(56) Entgegenhaltungen:
- DE-A- 3 009 331
- DE-A- 4 335 319
- DE-A- 4 335 645
- PATENT ABSTRACTS OF JAPAN vol. 095, no. 005, 30. Juni 1995 & JP 07 031932 A (NEC HOME ELECTRON LTD), 3. Februar 1995
- PATENT ABSTRACTS OF JAPAN vol. 013, no. 364 (E-805), 14. August 1989 & JP 01 120727 A (MITSUBISHI ELECTRIC CORP), 12. Mai 1989

## Beschreibung

Die Erfindung betrifft ein Verfahren zur Herstellung von Kolben für Lampen, bei dem die Lampenrohre mit einem Beschichtungsmittel beschichtet und danach getrocknet werden, wobei die Lampenrohre zwei Öffnungen aufweisen, die durch eine Achse, die der Längsachse des Lampenrohrs entspricht, verbunden werden können. Sie betrifft damit also einen Teil des Herstellungsverfahrens für Leuchtstofflampen, und zwar insbesondere den, bei dem die im allgemeinen als Lampenrohre verwendeten Glasrohre von innen mit einer möglichst gleichmäßigen Leuchtstoffschicht beschichtet werden und diese Schicht danach getrocknet wird.

Bisher sind dazu Verfahren verwendet worden, bei denen die Lampenrohre während der Beschichtung senkrecht stehen oder hängen und von der Oberseite ausgehend mit einem pastenartigen Beschichtungsmittel beschlämmt werden.

Die Trocknung erfolgte ebenfalls in senkrechter Lage durch Warmluftzufuhr von oben und teilweise auch von unten oder durch Infrarotbestrahlung von außen bei gleichzeitiger Luftspülung des Lampenrohrinneren.

Dabei sind die folgenden Nachteile deutlich geworden:

Um zu erreichen, dass sich das einströmende Beschichtungsmittel an der Innenwand der Lampenrohre bis in das obere Ende verteilt, waren entsprechend geformte Beschlämmventile und relativ hohe Einströmgeschwindigkeiten erforderlich. Dies gilt insbesondere für Lampenrohre mit sogenannten "Einrollungen", also Verjüngungen an den Rohrenden. Dabei war es besonders problematisch, das Beschichtungsmittel in den durch die Einrollung entstandenen oberen Schulterbereich gelangen zu lassen. Die erforderlichen hohen Strömungsgeschwindigkeiten führten einerseits zu Verschmutzungsproblemen für die entsprechende Vorrichtung oder Anlage und verursachten darüber hinaus Verwirbelungen des Beschichtungsmittels im Lampenrohr, die an der fertigen Lampe in Form von Schlieren, Wolken, Streifen oder Ablaufnasen sichtbar werden.

Ferner kam es zu Ungleichmäßigkeiten der herzustellenden Schichten, und zwar in Form von schrägen Beschichtungsrändern an den oberen Rohrenden bei nicht exakt zentrierten Lampenrohren oder unvollständiger Bedeckung bei nicht exakt senkrecht hängenden oder stehenden Lampenrohren.

Im Zusammenhang mit der Trocknung kam es zu folgenden Schwierigkeiten: Heißlufttrocknungssysteme erfordern lange Trockenzeiten und haben insbesondere bei kontinuierlich hindurchlaufenden Kolben einen erheblichen Raumbedarf. Es kommt ferner zu ungleichmäßigen Schichtdicken über die Länge der Lampenrohre, insbesondere zu sehr dünnen Schichtdicken im oberen und zu unerwünscht großen Dicken am unteren Ende. Darüber hinaus führt die heiße Luft zur Fleckenbildung in der Beschichtung jener Kolbenbereiche, die von den Kolbenträgerelementen berührt werden.

Bei der Infrarotstrahlungstrocknung war es erforderlich, die Lampenrohre zur Gleichmäßigkeit der Schichtdicken um die Rohrlängsachse rotieren zu lassen. Die erforderlichen Rotationseinrichtungen waren nicht nur relativ aufwendig, sondern auch - insbesondere im Zusammenhang mit aus der Beschichtung herrührenden Verschmutzungsproblemen - störungsanfällig. Ferner kam es zu hohem Ausschuss durch Glasbruch.

Unabhängig von den vorstehenden Ausführungen geht die Erfindung ganz allgemein aus von einem Verfahren zur Herstellung von Kolben für Lampen, bei dem Lampenrohre mit einem Beschichtungsmittel beschichtet und danach getrocknet werden, und von einer Vorrichtung zur Durchführung dieses Verfahrens.

Der Begriff "Rohr" umfasst hierbei alle geeigneten Formen mit zwei offenen Enden, die durch eine Achse, die der Längsachse des Lampenrohrs entspricht, verbunden werden können; Symmetrie ist nicht notwendig.

Der Erfindung liegt dabei das technische Problem zugrunde, das genannte Verfahren und die genannte Vorrichtung in ihren Betriebseigenschaften und ihrer Leistungsfähigkeit zu verbessern.

Dieses Problem wird gelöst durch ein Verfahren, bei dem die Lampenrohre bei der Beschichtung und Trocknung mit ihrer Längsachse in einem schrägen Winkel zur Waagerechten angeordnet sind, in dieser schrägen Winkellage um ihre Längsachse rotieren und die Beschichtung und die Trocknung bei der gleichen schrägen Winkellage und der gleichen Längsachsenrotation erfolgen.

Mit der Erfindung erübrigen sich hohe Strömungsgeschwindigkeiten des Beschichtungsmittels, weil der obere Rand eines Lampenrohres durch die Schräglage sehr viel leichter von dem Beschichtungsmittel erreicht werden kann. Dies gilt insbesondere auch für Lampenrohre mit Einrollungen oder vergleichbaren erschwerenden geometrischen Formen. Auch ist die Empfindlichkeit gegenüber exzentrischer oder verkippter Lage ohne Bedeutung.

In der DE-A-43 35 645 ist ein Beschichtungsverfahren für mehrfach gebogene, rohrförmige Lampengefäße mit 180° Biegungen, insbesondere für Kompaktleuchtstofflampen, beschrieben. Die Öffnungen an den beiden Lampengefäßenden zeigen jeweils zur gleichen Seite. Zur Beschichtung wird die dosierte Menge Suspension in das Lampengefäß mit oben liegender Öffnung eingebracht und das Glasgefäß anschließend nach dem Dosieren in der Vertikalen um einen Neigungswinkel vorzugsweise zwischen + 90° und - 90° geneigt, so dass die Gefäße beim Beschichtungsverfahren mehrfach in unterschiedliche Winkel geneigt bzw. gedreht werden müssen, damit das Beschichtungsmittel alle Bereiche der Innenwand benetzt.

Die DE-A-43 35 319 behandelt ein Beschichtungsverfahren für Lampengefäße aus einem gewendelten Glasrohr, wobei auch hier die Öffnungen an den beiden Lampengefäßenden jeweils zur selben Seite hin zeigen. Die gewendelten Glasrohre werden in vertikaler Position mit obenliegenden Öffnungen gefüllt und sodann nach unten geschwenkt, damit der Schlämmstoff auslaufen kann, wobei sie um die Längsachse der Wendel oder um eine dazu parallel Achse gedreht werden. Dadurch kann insbesondere eine stärkere Beschichtung an den Außenseiten des Glasrohrs erzielt werden.

Die Leistungsfähigkeit der Erfindung hinsichtlich der Gleichmäßigkeit der zu erzielenden Schichten kann weiter gesteigert werden, wenn die Beschichtung und die Trocknung nicht nur in der gleichen schrägen Winkellage und bei der gleichen Längsachsenrotation erfolgen, sondern dazwischen auch keine Unterbrechung dieses Lage- bzw. Bewegungszustandes auftritt. Wenn Veränderungen des Lage- bzw. Bewegungszustandes unvermeidlich sind, sollten sie möglichst langsam und gleichmäßig erfolgen. Es hat sich nämlich herausgestellt, dass jede, insbesondere abrupte, Bewegungs- oder Lageänderung zu Beeinträchtigungen dieser Gleichmäßigkeit führt. Es ist also anzustreben, sowohl bei der Beschichtung wie auch bei der Trocknung einen möglichst kontinuierlichen und gleichmäßigen Strömungszustand in den Lampenrohren zu gewährleisten.

Vorrichtungen und Verfahren nach der Erfindung werden weiter dadurch vereinfacht, dass die bereits angesprochene Kontinuität der Schräglage und der Längsachsenrotation durch einen kontinuierlichen Transportprozess, vorzugsweise im wesentlichen quer zur Längsachsenrichtung, erweitert wird. Damit lassen sich die Lampenrohre einfach und gleichmäßig durch verschiedene Stationen einer erfindungsgemäßen Vorrichtung transportieren, in denen Beschichtungs-, Trocknungs- und auch andere Verfahrensschritte durchgeführt werden.

Hinsichtlich des die schräge Lage definierenden Winkels der Längsachse der Lampenrohre zur Waagerechten hat sich ergeben, dass die erfindungsgemäßen Vorteile schon durch jede deutliche Abweichung von der senkrechten Lage erreicht werden, also etwa ab 85°. Eine untere Grenze für den Winkel ergibt sich daraus, dass in der waagerechten Lage keine Schwerkraftströmung auftritt. Eine untere Grenze kann also bei wenigen Grad liegen, vorzugsweise etwa bei 5°. Ein kleiner Winkel verlangsamt zwar die Strömung durch die Lampenrohre, führt aber zu besonders gleichmäßigen Ergebnissen. Daher sind Winkel zwischen 5 und 15° bevorzugt. Geeignete Untergrenze kann aber auch 10°, geeignete Obergrenzen können auch 75°, 60°, 45° oder 30° sein. Wenn am unteren Ende der Lampenrohre eine Einrollung oder Verjüngung vorliegt, so ist dieser Winkel um einen die Einrollung oder Verjüngung kennzeichnenden Winkel zu erhöhen. Es besteht sonst die Gefahr, daß sich vor dem unteren Ende ein Beschichtungsmittelstau und damit Schichtungleichmäßigkeiten bilden. Dieser kennzeichnende Winkel ist der, bei dem das Beschichtungsmittel gerade eben langsam aus der durch die Einrollung gebildeten Ecke ausläuft; häufig beträgt er etwa 45°.

Bei den vorstehenden Ausführungen zum Stand der Technik sind die Nachteile konventioneller Rotationseinrichtungen für Lampenrohre, die bei der Infrarotstrahlungstrocknung Verwendung gefunden haben, bereits beschrieben worden. Ferner wurde bereits erläutert, daß die Erfindung vorteilhafterweise mit einer Längsachsenrotation der Lampenrohre sowohl während der Beschichtung wie auch während der Trocknung ausgeführt wird. Erfindungsgemäß wird die Vorrichtung dazu weiter ausgebildet, indem statt einer zwei Transporteinrichtungen vorgesehen werden, die in solcher Weise getrennt an die Lampenrohre angreifen, daß eine Geschwindigkeitsdifferenz zwischen ihnen für eine Längsachsenrotation der Lampenrohre sorgt. Dadurch werden die Nachteile der konventionellen Rotationseinrichtungen vermieden. Die erfindungsgemäße Lösung bewährt sich vor allem bei dem genannten kontinuierlichen Quertransport der Lampenrohre durch die Beschichtungs- und Trocknungsstationen einer Gesamtanlage, weil die komplizierte Mitbewegung einer eigenen Rotationseinrichtung entfällt.

Als besonders einfache Lösung hat es sich ferner bewährt, eine Anschlageinrichtung am unteren Ende der Lampenrohre vorzusehen, so daß die Lampenrohre im übrigen nur aufliegend gehalten und nicht gegen eine Längsachsenbewegung (Rutschen) gesichert werden müssen. Dabei kann die Anschlageinrichtung selbst beweglich sein, insbesondere kann sie sich mit der Geschwindigkeit der jeweiligen Berührungsstellen mit den Lampenrohren mitbewegen, um Friktionsprobleme, z.B. für die Rotationsbewegung der Lampenrohre, zu vermeiden. Bei einer Längsachsenrotation der Lampenrohre heißt das also, daß das Lampenrohr auf der Anschlageinrichtung abrollt. Schließlich kann die Bewegung der Anschlageinrichtung so gewählt werden, daß die Anschlageinrichtung die Funktion einer der beiden obengenannten Transporteinrichtungen zur Erzeugung einer Geschwindigkeitsdifferenz übernimmt. Dazu muß sie sich mit einer effektiven Geschwindigkeit - Lateralgeschwindigkeit der Transportbewegung korrigiert durch Bahngeschwindigkeit der Berührungsstelle - bewegen.

Eine Transporteinrichtung, die gleichzeitig die Funktion einer Halteeinrichtung übernimmt, ist nach einer praktisch besonders bewährten Ausführungsform dadurch aufgebaut, daß zumindest ein mit speziellen Auflageelementen versehener Kettenantrieb vorgesehen ist. Die Auflageelemente sind so beschaffen und angebracht, daß sie im langgestreckten Zustand der Kette eine im wesentlichen durchgehende, also im wesentlich nahtlos zusammenhängende Transportbahn bilden. Die Auflageelemente können z.B. Blöcke aus einem geeigneten Material sein. Es können aber auch zur Überbrückung von Zwischenräumen der Kettenglieder z.B. Federbleche vorgesehen sein.

Der im wesentlichen durchgehende Aufbau der durch die Transporteinrichtung gebildeten Bahn schützt einerseits den darunterliegenden Kettenantrieb vor Verschmutzungen und sorgt andererseits, vor allem bei Erzeugung der Längsachsenrotation durch eine Geschwindigkeitsdifferenz und damit verbundenem Abrollen der Lampenrohre auf der Bahn, für einen störungsfreien und zuverlässigen Transportbetrieb. Insbesondere können auch zumindest zwei dieser Kettenantriebe vorgesehen sein, um die beiden beschriebenen Transporteinrichtungen zu bilden; ebenso kann die genannte Anschlageinrichtung - separat oder als einer der beiden Transporteinrichtungen - aus einem solchen Kettenantrieb gebildet sein.

Es gibt aber auch andere Möglichkeiten für die Ausführung einer reinen Transporteinrichtung oder kombinierten Halte-/Transporteinrichtung, etwa einen Kettenantrieb mit die Lampenrohre trennenden Trennelementen, z.B. abstehenden Stiften. Im Ausführungsbeispiel ist gezeigt, daß auch verschiedene Typen von Halte-/Transporteinrichtungen kombiniert werden können.

Im Zusammenhang mit der Einbringung des Beschichtungsmittels in die Lampenrohre hat es sich hinsichtlich der Zuverlässigkeit und Wartungsfreiheit als besonders günstig herausgestellt, auf die konventionellen Ventile (Ventilkegel in den Beschlämmdüsen) ganz zu verzichten. Statt dessen wird eine Strömungsumlenkeinrichtung eingesetzt, die als Teil einer Beschichtungsmitteleinbringeinrichtung zwischen zwei Positionen, einer Einbringposition und einer Ablaufposition, hin- und hergeschaltet werden kann. In der einen Position wird das Beschichtungsmittel in die Lampenrohre eingebracht, wohingegen es in der anderen Position in eine Rückführung abläuft. Die Beschichtungsmittelströmung wird also nicht ein- und ausgeschaltet, sondern umgelenkt, womit sich ein Ventil erübrigt. Durch die Rückführung kann dennoch der Beschichtungsmittelverbrauch minimiert werden. Eine Rückführung kann im übrigen natürlich auch am unteren Ende der Lampenrohre sowie generell unter der erfindungsgemäßen Vorrichtung vorgesehen sein.

Im folgenden wird anhand der Figuren ein Ausführungsbeispiel für eine erfindungsgemäße Vorrichtung erläutert, wobei dieser Beschreibungsteil auch zur Verdeutlichung des erfindungsgemäßen Verfahrens dient. Dabei offenbarte Merkmale können auch für sich oder in anderer Kombination erfindungswesentlich sein. Im einzelnen zeigen:
- Fig. 1: eine schematische Draufsicht auf eine erfindungsgemäße Vorrichtung;
- Fig. 2: eine schematische Seitenansicht der erfindungsgemäßen Vorrichtung im Beschlämmungsbereich, die einem von unten gesehenen Querschnitt entlang einer horizontalen Linie durch den unteren Teil in Fig. 1 entspricht;
- Fig. 3: eine schematische Seitenansicht der erfindungsgemäßen Vorrichtung im Trocknungsbereich, die einem von unten gesehenen Querschnitt entlang einer horizontalen Linie durch den oberen Teil in Fig. 1 entspricht;
- Fig. 4: einen Querschnitt durch eine Beschichtungsmitteleinbringeinrichtung, die als Teil der erfindungsgemäßen Vorrichtung in Fig. 1 rechts unten angedeutet ist; und
- Fig. 5: eine Detailansicht der Beschichtungsmitteleinbringeinrichtung aus Fig. 4 zur Verdeutlichung der Funktion einer Strömungsumlenkeinrichtung.

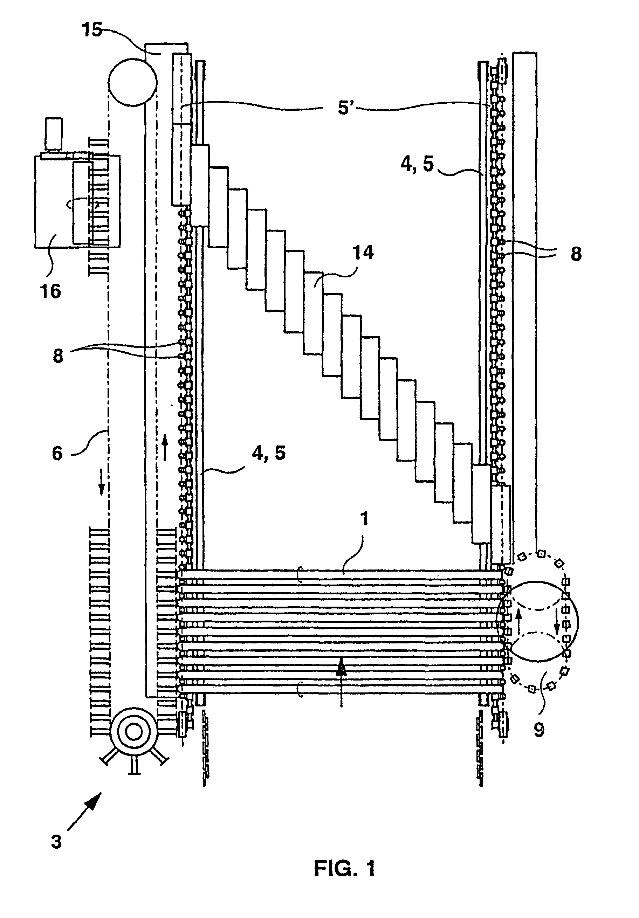

Fig. 1 zeigt im Überblick eine Draufsicht auf eine erfindungsgemäße Vorrichtung 3 zum Beschichten und Trocknen von Lampenrohren 1. Im unteren Bereich sind mehrere parallelliegende Lampenrohre 1 eingezeichnet, die sich in der Pfeilrichtung, also von unten nach oben in der Figur, durch die Vorrichtung 3 bewegen. Dabei befinden sie sich erfindungsgemäß ununterbrochen in einer schrägen Lage zur Waagerechten und rotieren gleichzeitig kontinuierlich um ihre Längsachse.

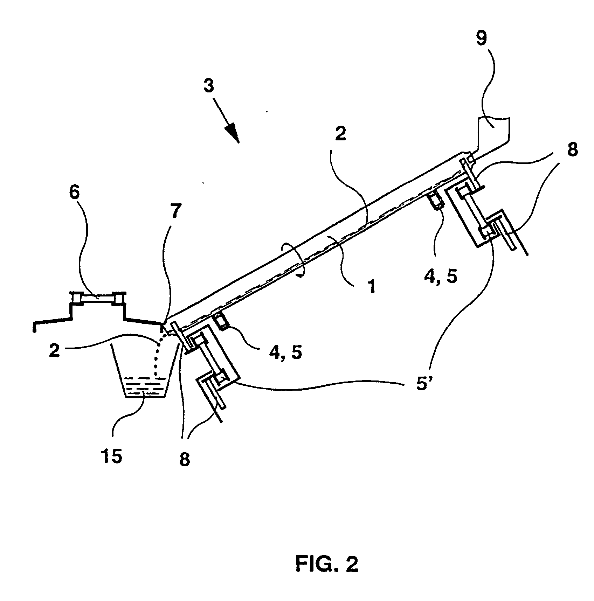

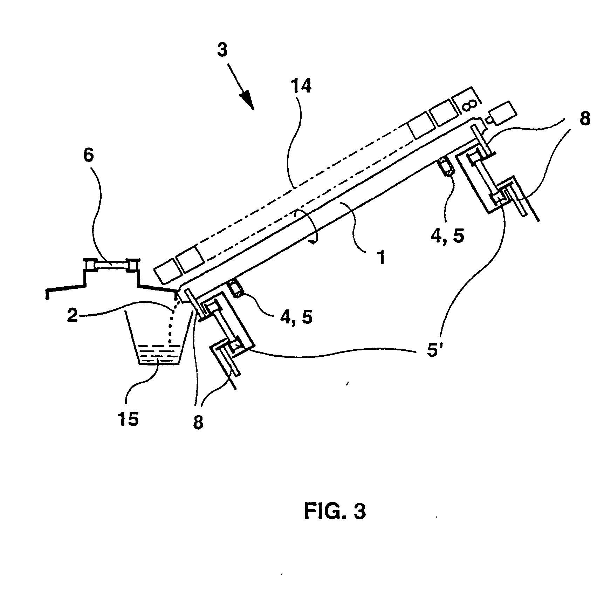

Dies wird deutlicher aus den Fig. 2 und 3, die jeweils einen in Fig. 1 aus der Perspektive von unten genommenen Querschnitt zeigen, und zwar in Fig. 2 im unteren Bereich der Fig. 1 bei der Beschichtungsmitteleinbringeinrichtung 9 und in Fig. 3 im oberen Bereich in Fig. 1 im Bereich einer Infrarotstrahstrahlungsheizung 14. Insbesondere ist in den Fig. 2 und 3 auch die Längsachsenrotation der Lampenrohre 1 mit einem runden Pfeil angedeutet.

Die Lage, Transportbewegung und Längsachsenrotation der Lampenrohre 1 wird durch Zusammenwirken folgender Teile der Vorrichtung 3 bewerkstelligt:

Zunächst ruhen die Lampenrohre 1 auf einer sich entlang dem Transportweg der Lampenrohre 1 in der Vorrichtung 3 erstreckenden Halteeinrichtung 4, die gleichzeitig eine Transporteinrichtung 5 ist. Diese Halte- und Transporteinrichtung besteht aus einem eingangs bereits beschriebenen Kettenantrieb mit im langgestreckten Zustand eine zusammenhängende Transportbahn bildenden Auflageblöcken. Man erkennt in Fig. 1, daß der die Halte- und Transporteinrichtung 4, 5 bildende Kettenantrieb als Paar aus zwei einzelnen Antrieben vorgesehen ist, die sich jeweils in einem gewissen Abstand von einem Ende des Lampenrohrs unter dem Lampenrohr 1 befinden. Dabei sind die Transportbahnen als Streifen und in den Fig. 2 und 3 als rechteckige Querschnitte durch die Auflageblöcke gezeichnet.

Der Abstand von dem jeweiligen Lampenrohrende ist so bemessen, daß eine zweite Transporteinrichtung 5' jeweils lampenrohrendseitig von der beschriebenen Halte- und Transporteinrichtung 4, 5 bzw. dem Kettenantrieb mit den Auflageblöcken Platz findet. Diese zweite Transporteinrichtung 5' ist wiederum als Paar aus zwei einzelnen unter den Lampenrohren 1 an ihren beiden Enden angeordneten Kettenantrieben ausgebildet, die jeweils an der Kette mit Trennelementen 8 in Form von von der Kette nach außen stehenden Stiften versehen sind. Diese Stifte 8 sind der die Lampenrohre 1 berührende Teil dieser Transporteinrichtung 5'. Die Stifte 8 trennen die Lampenrohre 1 voneinander und transportieren sie entlang dem in Fig. 1 der Vertikalen entsprechenden Transportweg.

Beide Transporteinrichtungen 5, 5', die erste mit den Auflageblöcken sowie die zweite mit den Trennstiften 8, sind jeweils angetrieben, und zwar mit einer etwas unterschiedlichen Geschwindigkeit. Dadurch geben die Stifte 8 die Lineargeschwindigkeit der Lampenrohre vor, während die sich etwas schneller bewegenden Auflageblöcke der ersten Halte- und Transporteinrichtung 4, 5 um einen der Bahngeschwindigkeit des Lampenrohrumfangs bei der Längsachsenrotation entsprechendem Betrag schneller laufen.

Um zu verhindern, daß die Lampenrohre 1 in der gezeichneten Schräglage (in den Fig. 2 und 3 nach links unten) abrutschen, ist zusätzlich eine Anschlageinrichtung 6 im linken Bereich der Vorrichtung 3 vorgesehen. Diese besteht gleichfalls aus einem Kettenantrieb mit einzelnen Anschlagelementen, die durch den Kettenantrieb entlang dem Transportweg so angetrieben sind, daß ihre Berührungsstellen 7 mit einem Lampenrohr 1 jeweils friktionsfrei bleiben. Das heißt, daß das Lampenrohr 1 bei seiner Längsachsenrotation auf einer sich relativ zu der Anschlageinrichtung 6 verschiebenden Berührungsstelle 7 abrollt. Damit dies gleichmäßig und unterbrechungsfrei geschehen kann, sind die Anschlagelemente der Anschlageinrichtung 6 an ihrem Außenteil jeweils mit Blechen versehen, die ähnlich wie die Auflageblöcke der Halte- und Transporteinrichtung 4, 5 im langgestreckten Zustand der Kette mit den Anschlagelementen eine durchgehende Bahn bilden.

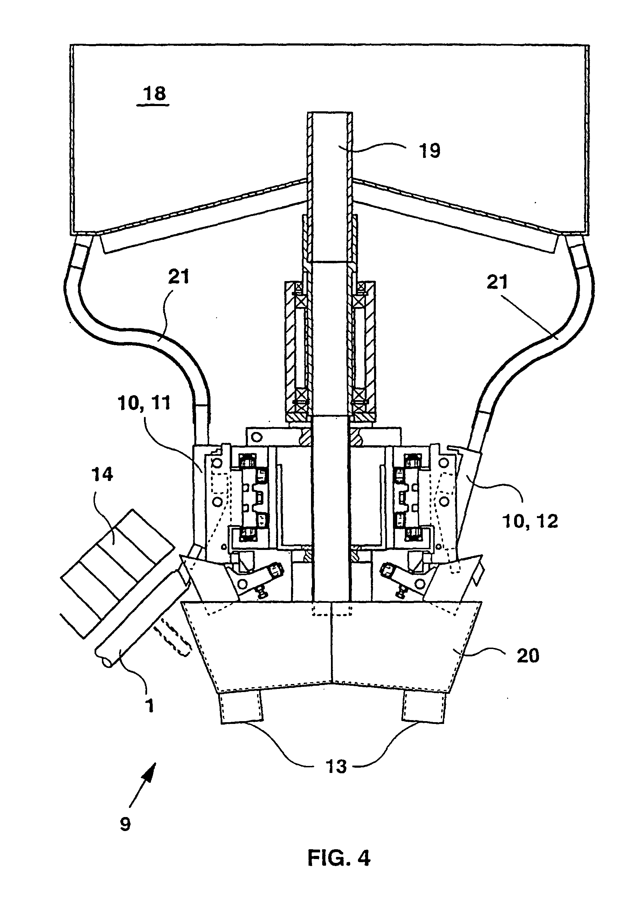

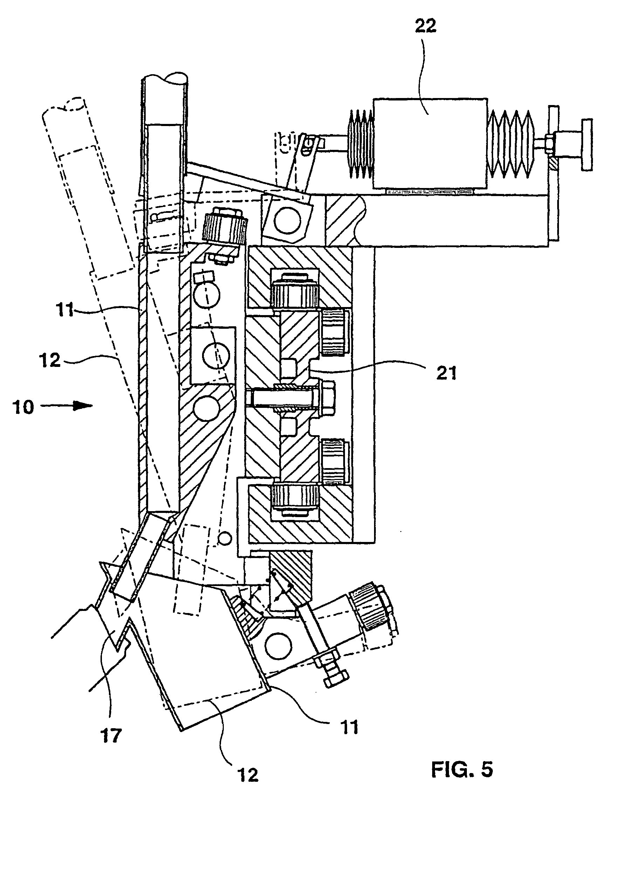

In Fig. 1 rechts unten und in Fig. 2 rechts oben ist jeweils eine Beschichtungsmitteleinbringeinrichtung 9 angedeutet, die weiter unten anhand der Fig. 4 und 5 genauer beschrieben wird. Im vorliegenden Zusammenhang ist nur wichtig, daß die in Fig. 2 angedeutete Beschichtungsmitteleinbringeinrichtung 9 ein zähflüssiges Beschichtungsmittel 2 in eine obere Öffnung jedes Lampenrohres 1 einlaufen läßt. Wie in Fig. 1 zu sehen, geschieht dies, während der Auslauf über eine kurze Strecke am Anfang des Transportweges mit den Lampenrohren mitläuft. Das Beschichtungsmittel 2 läuft erfindungsgemäß langsam und gleichmäßig vom oberen Rand des Lampenrohres 1 beginnend in ihm hinunter und wird durch die Längsachsenrotation während des Herablaufens gleichmäßig auf der gesamten Innenfläche des Lampenrohres 1 verteilt. Die Geschwindigkeit der Längsachsenrotation und der erfindungswesentliche Schrägwinkel, der durch die Relativanordnung der jeweiligen Elemente in den aus der ersten Halte- und Transporteinrichtung 4, 5 und der zweiten Transporteinrichtung 5' gebildeten Paaren vorgegeben wird, sind wichtige Parameter für die entstehende Schicht. Dabei ist zumindest die Längsachsenrotationsgeschwindigkeit durch die Differenz der Transportgeschwindigkeiten einstellbar; ferner kann auch der Winkel durch entsprechende Aufhängung der Einrichtungen 4, 5 und 5' einstellbar sein.

Überschüssiges Beschichtungsmittel 2 läuft aus einem unteren Ende des Lampenrohrs 1 in eine Rinne 15 aus, die zu einer im folgenden noch erwähnten Beschichtungsmittelrückführung 13 zur Zurückführung und Wiederverwertung gehört. Die Berührungsstelle 7 zwischen dem Ende des entsprechenden Anschlagelements der Anschlageinrichtung 6 und dem Lampenrohr 1 ist dabei so hoch angeordnet, und das Ende des Anschlagelements nach unten so knapp bemessen, daß das nach unten auslaufende Beschichtungsmittel 2 nicht an der Anschlageinrichtung 6 entlang läuft. Durch das beschriebene Abrollen des Lampenrohrs 1 an der Berührungsstelle 7 auf der durch die Anschlagelemente der Anschlageinrichtung 6 gebildeten Bahn kommt es dennoch zu einer geringen Kontamination durch den beschichtungsmittelbenetzten oberen Rand der unteren Öffnung des Lampenrohrs 1. Deswegen ist an der lampenrohrabgewandten Seite des zu der Anschlageinrichtung 6 gehörenden Kettenantriebs eine Waschvorrichtung 16 vorgesehen. Sie ist in Fig. 1 links oben eingezeichnet, wobei zu sehen ist, daß eine rotierende Bürste die Enden der Anschlagelemente reinigt.

In Fig. 1 ist rechts unten ferner zu sehen, daß die Lampenrohre 1 nach Verlassen des Teils des Transportweges, an dem die Beschichtungsmitteleinbringeinrichtung 9 angeordnet ist, in den Bereich einer sich diagonal über den Transportweg und die Länge der Lampenrohre 1 erstreckenden Infrarotstrahlungsheizung 14 eintritt. Zusammen mit Fig. 3 ergibt sich, daß Einzelelemente dieser Strahlungsheizung 14 jeweils einen Teil der Länge eines Lampenrohrs 1 heizen, wobei im zeitlichen Ablauf des Transports durch die Vorrichtung 3 zunächst das höher angeordnete Ende der Lampenrohre beheizt wird und dann Schritt für Schritt tieferliegende Teile der Lampenrohre bis zu ihrem unteren Ende beheizt werden. Durch die lineare Transportgeschwindigkeit durch die Vorrichtung 3 einerseits sowie die diagonale Anordnung der Strahlungsheizung 14 zum Transportweg und die Leistung der Einzelelemente der Strahlungsheizung 14 andererseits kann der Heiz- und Trocknungsvorgang im Detail eingestellt werden.

Damit eine Beeinträchtigung der Strahlungsheizung 14 und damit des Trocknungsvorgangs durch Verschmutzung und damit Abdeckung durch Beschichtungsmittel sicher ausgeschlossen werden kann, ist die Strahlungsheizung 14, wie in Fig. 3 zu sehen, über den Lampenrohren angeordnet. Dabei verläuft sie in der Perspektive der Fig. 3 im wesentlichen parallel zu den Lampenrohren 1. Da durch den erfindungsgemäßen Verzicht auf hohe Einströmgeschwindigkeiten des den Auslauf der Beschichtungsmitteleinbringeinrichtung 9 verlassenden Beschichtungsmittels 2 nur sehr geringe oder praktisch keine Kontaminationen der Bereiche außerhalb des Innenraums der Innenrohre 1, der Auffangrinne 15 sowie der Anschlageinrichtung 6 auftreten, können die Halte- und Transporteinrichtung 4, 5 und die Transporteinrichtung 5' mit den Stiften 8 unter den Lampenrohren 1 angeordnet verlaufen, so daß sie in einfacher Weise durch die gesamte Transportlänge der Vorrichtung 3 durchgehend ausgeführt sein können und dennoch die Strahlungsheizung 14 (auf der anderen Seite) ohne Kollision mit diesen Einrichtungen sehr nahe an die Lampenrohre 1 herangebracht werden kann. Dadurch wird neben der baulichen Vereinfachung auch eine Verbesserung des Wirkungsgrads der Strahlungsheizung 14 erzielt.

Die Fig. 4 und 5 zeigen die Beschichtungsmitteleinbringeinrichtung 9, die das beschriebene verschmutzungsarme und langsame Einströmen des Beschichtungsmittels 2 in die Lampenrohre 1 durch einen einfachen Auslauf 17 einer Strömungsumlenkeinrichtung 10 bewerkstelligt. Der Auslauf 17 und die Strömungsumlenkeinrichtung 10 sind in Fig. 5 näher bezeichnet, die den linken unteren Bereich der Fig. 4 mit weiteren Einzelheiten zeigt. Die Strömungsumlenkeinrichtung 10 besteht hier aus zwei Teilen, einem oberen und einem unteren, die in Fig. 5 in durchgezogenen Linien und mit 11 bezeichnet in einer Einbringposition sowie in gestrichelten Linien und mit 12 bezeichnet in einer Ablaufposition gezeigt sind. Fig. 4 zeigt die Strömungsumlenkeinrichtung 10 nur in der Einbringposition 11.

In Fig. 4 ist zunächst im oberen Bereich ein Behälter 18 für das Beschichtungsmittel 2 eingezeichnet, von dem zentrisch ein Überlaufrohr 19 in eine unter der gesamten Beschichtungsmitteleinbringeinrichtung 9 angeordnete Wanne 20 führt. Die Wanne 20 ist, wie mit dem Bezugszeichen 13 angedeutet, im weiteren an die bereits erwähnte Beschichtungsmittelrückführung 13 angeschlossen.

Von dem Überlaufrohr 19 abgesehen, fließt das Beschichtungsmittel 2 über Schläuche 21 in die Strömungsumlenkeinrichtung 10, die das Beschichtungsmittel 2, wie in den Fig. 4 und 5 gleichermaßen zu sehen, durch zwei Rohrstücke zu dem - in der Einbringposition 11 - in dem oberen Ende des Lampenrohres 1 angeordneten Auslauf 17 führt. In der in Fig. 5 gestrichelt gezeichneten zweiten Ablaufposition 12 sind die beiden Rohrstücke und ein mit dem Auslauf 17 verbundener Trichter so verkippt, daß das Beschichtungsmittel 2 durch die Rohrstücke und den Trichter nicht zu dem Auslauf 17 sondern in die Wanne 20 geführt wird. Wie bereits erwähnt, ersetzt dieses Umschalten der Strömungsumlenkeinrichtung 10 das konventionelle Einströmventil, wobei erfindungsgemäß kein Ventil, keine Achsen oder sonstige verschmutzungsempfindliche mechanische Teile mit dem Beschichtungsmittel 2 in Kontakt kommen. Es ist vielmehr ein kontinuierlicher Durchfluß möglich, der durch die gezeichnete Kippbewegung lediglich zwischen dem Ablauf 17 und der Rinne 20 hin- und hergeschaltet wird.

Die Beschichtungsmitteleinbringeinrichtung 9 weist eine Vielzahl von einzelnen Strömungsumlenkeinrichtungen 10 auf, die entlang der in Fig. 1 gezeichneten ovalen Bahn von einem Kettenantrieb 21 - in Fig. 5 gezeichnet - bewegt werden, so daß sie an der den Lampenrohren 1 zugewandten langen Seite des Ovals jeweils mit einzelnen Lampenrohren 1 mitlaufen und diese dabei befüllen können. Gleichzeitig dreht sich der Behälter 18, wie ebenfalls in Fig. 1 angedeutet, im Kreis, wobei die geometrische Abweichung zwischen dem Oval und der Kreisbewegung des Behälters 18 durch die Flexibilität der Schläuche 21 ausgeglichen wird. Dabei wird die bereits beschriebene Kippbewegung des oberen und des unteren Teils der Strömungsumlenkeinrichtung 10 durch entsprechende Kurven entlang der ovalen Bahn erzeugt, auf der mit den beiden Teilen der Strömungsumlenkeinrichtung 10 verbundene Rollen federvorgespannt abrollen. So können mit einem einzigen Kettenantrieb die ovale Bewegung der Strömungsumlenkeinrichtungen 10, über die Schläuche 21 vermittelt die Drehbewegung des Behälters 18 sowie durch das Abrollen auf den entsprechend geformten Kurven die Kippbewegungen der oberen und unteren Teile der Strömungsumlenkeinrichtungen 10 erzeugt werden. Die Kurven sind in den Figuren nicht dargestellt.

Wenn die Beschichtungsmittelzufuhr abgeschaltet werden soll, kann dies über einen in Fig. 5 oben rechts eingezeichneten Magnetantrieb 22 geschehen, der durch einen im einzelnen nicht dargestellten Mechanismus die Kippbewegung des oberen und des unteren Teils der Strömungsumlenkeinrichtung 10 in die Einbringposition 11 in dem den Lampenrohren 1 zugewandten Teil der ovalen Bahn unterbinden kann.

## Patentansprüche

1. Verfahren zur Herstellung von Kolben für Lampen, bei dem die Lampenrohre (1) mit einem Beschichtungsmittel (2) beschichtet und danach getrocknet werden, wobei die Lampenrohre (1) zwei Öffnungen aufweisen, die durch eine Achse, die der Längsachse des Lampenrohrs (1) entspricht, verbunden werden können, **dadurch gekennzeichnet, dass** die Lampenrohre (1) bei der Beschichtung und bei der Trocknung mit ihrer Längsachse in einem schrägen Winkel zur Waagerechten angeordnet sind, in dieser schrägen Winkellage um ihre Längsachse rotieren und die Beschichtung und die Trocknung bei der gleichen schrägen Winkellage und der gleichen Längsachsenrotation erfolgen.

2. Verfahren nach Anspruch 1, **dadurch gekennzeichnet, dass** die Beschichtung und die Trocknung bei der gleichen schrägen Winkellage und der gleichen Längsachsenrotation ohne Unterbrechung dieses Lage- bzw. Bewegungszustandes erfolgen.

3. Verfahren nach Anspruch 2, **dadurch gekennzeichnet, dass** die Lampenrohre (1) während der Beschichtung und der Trocknung kontinuierlich durch eine Vorrichtung (3) zur Durchführung des Verfahrens transportiert werden.

4. Verfahren nach Anspruch 1, **dadurch gekennzeichnet, dass** der schräge Winkel zwischen 5° und 15° beträgt, ggf. erhöht um einen Einrollungswinkel der Lampenrohre (1).

5. Vorrichtung (3) zur Durchführung eines Verfahrens nach einem der vorstehenden Ansprüche, **dadurch gekennzeichnet, dass** die Vorrichtung (3) eine Halteeinrichtung (4) mit einer oder mehreren in dem schrägen Winkel zur Waagerechten liegenden Lampenrohrpositionen aufweist.

6. Vorrichtung (3) nach Anspruch 5, **dadurch gekennzeichnet, dass** die Vorrichtung (3) zwei getrennt an die Lampenrohre (1) angreifenden Transporteinrichtungen (5, 5') zur Erzeugung einer Längsachsenrotation der Lampenrohre (1) durch eine Geschwindigkeitsdifferenz der Transporteinrichtungen (5, 5') besitzt.

7. Vorrichtung (3) nach Anspruch 5 oder 6, **dadurch gekennzeichnet, dass** die Vorrichtung (3) eine Anschlageinrichtung (6) am in der Längsrichtung unteren Ende der Lampenrohre (1) besitzt, die mit einer effektiven Geschwindigkeit einer Berührungsstelle (7) an einem Lampenrohr (1) mitläuft.

8. Vorrichtung (3) nach einem der Ansprüche 5 bis 7, **dadurch gekennzeichnet, dass** die Vorrichtung (3) mit einer Halte- und Transporteinrichtung (4, 5) ausgestattet ist, die einen im wesentlichen quer zur Längsachse der Lampenrohre (1) verlaufenden Kettenantrieb aufweist, der derart mit Auflage- oder Überbrückungselementen an den Kettengliedern versehen ist, dass in zum Transport langgestreckt verlaufender Lage der Kettenglieder eine im wesentlichen nahtlos zusammenhängende Transportbahn gebildet wird.

9. Vorrichtung (3) nach den Ansprüchen 7 und 8, **dadurch gekennzeichnet, dass** die Halte- und Transporteinrichtung (4, 5) zwei der genannten Kettenantriebe aufweist, von denen einer die Anschlageinrichtung (6) bildet.

10. Vorrichtung (3) nach einem der Ansprüche 5 bis 9, **dadurch gekennzeichnet, dass** die Vorrichtung (3) mit einer Transporteinrichtung (5') ausgestattet ist, die einen im wesentlichen quer zur Längsachse der Lampenrohre (1) verlaufenden Kettenantrieb aufweist, der mit die Lampenrohre (1) trennenden Trennelementen (8) versehen ist.

11. Vorrichtung (3) nach einem der Ansprüche 5 bis 10, **dadurch gekennzeichnet, dass** die Vorrichtung (3) eine Beschichtungsmitteleinbringeinrichtung (9) besitzt, die eine Strömungsumlenkeinrichtung (10) zwischen einer Einbringposition (11) und einer Ablaufposition (12) schaltet, wobei das Beschichtungsmittel (2) in der Einbringposition (11) in die Lampenrohre (1) eingebracht wird und in der Ablaufposition (12) in eine Rückführung (13) abläuft.

## Claims

1. Method for producing bulbs for lamps, in which the lamp tubes (1) are coated with a coating means (2) and dried thereafter, the lamp tubes (1) having two openings which are connected by an axis corresponding to the longitudinal axis of the lamp tube (1), **characterized in that**, during coating and during drying, the lamp tubes (1) are arranged with their longitudinal axis at an oblique angle to the horizontal and rotate about their longitudinal axis in this oblique angular position, and coating and drying are performed with the same oblique angular position and the same rotation about the longitudinal axis.

2. Method according to Claim 1, **characterized in that** coating and drying are performed with the same oblique angular position and the same rotation about the longitudinal axis without interrupting this state of position or movement.

3. Method according to Claim 2, **characterized in that**, during coating and drying, the lamp tubes (1) are continuously transported by a device (3) for carrying out the method.

4. Method according to Claim 1, **characterized in that** the oblique angle is between 5° and 15°, possibly increased by a roll-in angle of the lamp tubes (1).

5. Device (3) for carrying out a method according to one of the preceding claims, **characterized in that** the device (3) has a holding device (4) with one or more lamp tube positions situated at the oblique angle to the horizontal.

6. Device (3) according to Claim 5, **characterized in that** the device (3) has two transport devices (5, 5') acting separately on the lamp tubes (1) for producing a rotation of the lamp tubes (1) about the longitudinal axis by a speed difference of the transport devices (5, 5').

7. Device (3) according to Claim 5 or 6, **characterized in that** the device (3) has a stop device (6) at the end of the lamp tubes (1) which is the lower one in the longitudinal direction, which stop device also runs on a lamp tube (1) at an effective speed of a contact site (7).

8. Device (3) according to one of Claims 5 to 7, **characterized in that** the device (3) is fitted with a holding and transport device (4, 5) which has a chain drive which runs essentially transverse to the longitudinal axis of the lamp tubes (1) and is provided with supporting or bridging elements on the chain links in such a way that an essentially seamlessly coherent transport path is formed in a position of the chain links running longitudinally extended relative to the transport.

9. Device (3) according to one of Claims 7 and 8, **characterized in that** the holding and transport device (4, 5) has two of said chain drives, of which one forms the stop device (6).

10. Device (3) according to one of Claims 5 to 9, **characterized in that** the device (3) is fitted with a' transport device (5') which has a chain drive running essentially transverse to a longitudinal axis of the lamp tubes (1) and is provided with separating elements (8) which separate the lamp tubes (1).

11. Device (3) according to one of Claims 5 to 10, **characterized in that** the device (3) has a device (9) for introducing coating means, which switches a flow-deflecting device (10) between an introducing position (11) and a discharging position (12), the coating means (2) being introduced into the lamp tubes (1) in the introducing position (11) and being discharged into a return device (13) in the discharging position (12).

## Revendications

1. Procédé de production d'ampoules de lampes, dans lequel on revêt des tubes (1) de lampe d'un agent (2) de revêtement et ensuite on les sèche, les tubes (1) de lampe ayant deux ouvertures qui peuvent être reliées par un axe correspondant à l'axe longitudinal du tube (1) de lampe, **caractérisé en ce que** l'on incline d'un certain angle par rapport à l'horizontale les axes longitudinaux des tubes (1) de lampe lors du revêtement et lors du séchage, on les fait tourner, dans cette position angulaire, par rapport à leur axe longitudinal et l'on effectue le revêtement et le séchage en ayant la même position angulaire inclinée et la même rotation par rapport à l'axe longitudinal.

2. Procédé suivant la revendication 1, **caractérisé en ce que** l'on effectue le revêtement et le séchage en ayant la même position angulaire inclinée et la même rotation par rapport à l'axe longitudinal sans interruption de cet état de position ou de mouvement.

3. Procédé suivant la revendication 2, **caractérisé en ce que** l'on transporte les tubes (1) de lampe pendant le revêtement et le séchage en continu dans un dispositif (3) de mise en oeuvre du procédé.

4. Procédé suivant la revendication 1, **caractérisé en ce que** l'angle d'inclinaison est compris entre 5° et 15° en étant, le cas échéant, augmenté d'un angle de sertissage des tubes (1) de lampe.

5. Installation (3) pour la mise en oeuvre d'un procédé suivant l'une des revendications précédentes, **caractérisée en ce que** l'installation (3) a un dispositif (4) de maintien ayant une ou plusieurs positions de tube de lampe se trouvant à l'angle incliné par rapport à l'horizontale.

6. Installation (3) suivant la revendication 5, **caractérisée en ce que** l'installation (3) a deux dispositifs (5, 5') de transport attaquant séparément les tubes (1) de lampe et de production d'une rotation par rapport à l'axe longitudinal des tubes (1) de lampe par une différence de vitesse des dispositifs (5, 5') de transport.

7. Installation (3) suivant la revendication 5 ou 6, **caractérisée en ce que** l'installation (3) a un dispositif (6) de butée à l'extrémité inférieure dans la direction longitudinale, des tubes (1) de lampe, qui tourne avec une vitesse effective d'un point (7) de contact sur un tube (1) de lampe.

8. Installation (3) suivant l'une des revendications 5 à 7, **caractérisée en ce que** l'installation (3) est équipée de dispositifs (4, 5) de maintien et de transport, qui ont une transmission par chaîne s'étendant sensiblement transversalement à l'axe longitudinal des tubes (1) de lampe et munie sur les maillons de chaîne d'éléments d'assise ou de recouvrement, de façon à former dans la position, s'étendant en longueur par rapport au transport, des maillons de chaîne une voie de transport d'un seul tenant sensiblement sans discontinuité.

9. Installation (3) suivant les revendications 7 et 8, **caractérisée en ce que** les dispositifs (4, 5) de maintien et de transport ont deux des guides transmission à chaîne dont l'une forme le dispositif (6) de butée.

10. Installation (3) suivant l'une des revendications 5 à 9, **caractérisée en ce que** l'installation (3) est équipée d'un dispositif (5') de transport qui a une transmission à chaîne s'étendant sensiblement transversalement à l'axe longitudinal des tubes (1) de lampe et munie d'éléments (8) de séparation séparant les tubes (1) de lampe.

11. Installation (3) suivant l'une des revendications 5 à 10, **caractérisée en ce que** l'installation (3) a un dispositif (9) d'apport d'un agent de revêtement qui fait passer un dispositif (10) de déviation du courant entre une position (11) d'apport et une position (12) d'évacuation, l'agent (2) de revêtement étant introduit dans les tubes (1) de lampe en la position (11) d'apport et s'évacuant dans un conduit (13) de retour en la position (12) d'évacuation.
